# FASCICULE DE BREVET EUROPEEN

(11) **EP 1 671 451 B1**
(45) Date de publication et mention de la délivrance du brevet: **05.03.2008**
(21) Numéro de dépôt: 04787436.7
(22) Date de dépôt: 24.09.2004
(51) Int. Cl.: H04L 12/14

(54) **PROCEDE ET SYSTEME DE MISE A DISPOSITION D'INFORMATIONS DE TAXATION D'UN SERVICE PAYANT DELIVRE PAR UN FOURNISSEUR DE SERVICES**
VERFAHREN UND SYSTEM ZUR BEREITSTELLUNG VON GEBÜHRENINFORMATIONEN BEZÜGLICH EINES DURCH EINEN DIENSTANBIETER BEREITGESTELLTEN BEZAHLUNGSDIENSTES
METHOD AND SYSTEM FOR PROVISION OF CHARGING INFORMATION ON A PAY SERVICE PROVIDED BY A SERVICE PROVIDER

(30) Priorité: 30.09.2003 FR 0311448
(43) Date de publication de la demande: 21.06.2006
(73) Titulaire: Orangefrance, 92120 Montrouge (FR)
(72) Inventeur: ANNIC, Etienne, F-78120 Rambouillet (FR); BOUTROUX, Anne, F-14880 Hermanville sur Mer (FR); RAVIER, Jean-François, F-14800 Saint-Arnoult (FR); GOUTARD, Cédric, F-14440 Douvres-La-Délivrande (FR)
(74) Mandataire: Loisel, Bertrand
(86) Numéro de dépôt international: PCT/FR2004/002410
(87) Numéro de publication internationale: WO 2005/034427

(56) Documents cités:
- WO-A-01/69903
- WO-A-02/054672
- WO-A-02/067616
- US-A- 6 044 405
- US-A1- 2003 023 550
- "INTERNET CONTENT ADAPTATION PROTOCOL (ICAP)" INTERNATIONAL CONFERENCE ON ANTENNAS AND PROPAGATION, XX, XX, 30 juillet 2001 (2001-07-30), pages 1-13, XP002226584

## Description

L'invention concerne le domaine des services payants délivrés par des fournisseurs de services, par l'intermédiaire d'un réseau informatique tel que le réseau Internet.

Plus particulièrement, l'invention concerne un procédé et un système de mise à disposition d'informations de taxation d'un service payant.

Les fournisseurs d'accès, qui permettent à leur abonnés d'accéder à un réseau informatique ou de télécommunication souhaitent généralement proposer, outre l'accès au réseau, des services complémentaires à valeur ajoutée afin d'enrichir les offres qu'ils proposent à leurs abonnés. En effet, les fournisseurs d'accès souhaitent souvent mettre en place des systèmes de bouquets de services partenaires ou kiosques, selon le modèle du Minitel®. Pour ce faire, ils établissent des relations de partenariat avec des fournisseurs de services susceptibles de fournir ces prestations. Ces services complémentaires sont bien entendu payants.

Dans le cadre de l'utilisation de tels services, il est souhaitable que les abonnés puissent disposer d'informations relatives à la taxation de ces services, au cours de leur consultation.

Il existe à ce jour diverses techniques permettant de fournir aux utilisateurs de services payants des informations de taxation relatives à la consultation ou, de manière générale, à l'accès aux services.

On pourra ainsi se référer aux services i-Minitel® et AvA® (« Aire à valeur ajoutée »), proposés par la demanderesse, qui permettent d'émettre des tickets de taxation ou, de manière générale, des informations de taxation, lors des consultations. Selon ces services, pendant toute la durée des consultations payantes, l'utilisateur peut disposer d'informations relatives à la consultation, telles que le tarif, la durée de consultation, le nom du service consulté, ainsi que, le cas échéant, le volume de fichiers téléchargés. Ces techniques présentent cependant un inconvénient majeur, dans la mesure où elles nécessitent l'emploi d'une ligne téléphonique analogique ou numérique pour récupérer ces informations et sont dès lors incompatibles par exemple avec les téléphones mobiles. En outre, elles nécessitent l'installation d'une application sur le poste de l'utilisateur et, en particulier pour la technique i-Minitel®, elles ne s'appliquent que pour récupérer des informations relatives aux services pour lesquels elles ont été conçues.

Il est également connu de générer des informations de taxation à partir de l'adresse du serveur hébergeant le service ou en utilisant l'adresse URL (« Universal Ressource Locator ») de la page d'accueil du service. Cette technique est également limitée dans la mesure où plusieurs services peuvent être hébergés au sein d'un même serveur et où un service peut correspondre à plusieurs adresses URL.

Les documents WO 01/69903 et WO 02/067616 décrivent des systèmes de facturation présentant ces inconvénients.

Le but de l'invention est donc de pallier les inconvénients précités et, en particulier, de permettre une mise à disposition d'informations de taxation et ce, sans être limité par la nature du poste de l'utilisateur, sans nécessiter d'implanter une application particulière sur ce poste, et sans nécessiter d'utiliser les informations de localisation du serveur d'hébergement et de la page d'accueil du service.

Ainsi, selon un premier aspect, l'invention a pour objet un procédé de mise à disposition d'informations de taxation d'un service payant délivré par un fournisseur de service accessible par un réseau informatique, tel que le réseau Internet, depuis une plate-forme d'accès au réseau informatique.

Ce procédé comporte les étapes consistant à :
- extraire un code d'identification du service d'un flux de données en provenance d'un site mettant en oeuvre le service ;
- interroger une base de données dans laquelle sont stockées des informations de tarification de l'ensemble des services payants accessibles depuis la plate-forme d'accès, à partir du code d'identification extrait, pour récupérer des informations de taxation correspondant au service demandé ;
- insérer dans le flux de données un code d'instructions élaboré à partir des informations de tarification extraites pour l'élaboration d'un message de tarification du service ; et
- mettre en oeuvre le code d'instructions pour délivrer le message de tarification.

Selon une autre caractéristique du procédé selon l'invention, l'étape d'extraction du code de service comprend les étapes d'analyse des en-têtes du flux de données pour récupérer les données correspondant à des pages HTML et les données dont l'en-tête contient un code d'identification du service, et de transmission des autres données à un utilisateur distant.

Avantageusement, l'étape d'extraction du code d'identification du service est mise en ouvre en utilisant le protocole d'adaptation de contenu ICAP.

Dans un mode de mise en oeuvre, le code d'instructions est constitué par un code écrit en langage HTML et est inséré dans des données HTML de pages HTML reçue en provenance dudit site pour l'affichage des informations de tarification dans lesdites pages.

En variante, le code d'instructions est constitué par des instructions de programmation et est inséré dans les données HTML de pages HTML reçues en provenance du site pour être exécuté par un navigateur Internet pour l'affichage d'une fenêtre de présentation des informations de tarification.

Avantageusement, les instructions de programmation sont écrites en langage « Javascript ».

Selon un mode de mise en oeuvre, le procédé comporte en outre une étape de contrôle de l'identité du service délivré, par contrôle d'un code caractéristique du service extrait du flux de données.

Selon un autre aspect, l'invention a pour objet un système de mise à disposition d'informations de taxation d'un service payant délivré par un fournisseur de service accessible par un réseau informatique, tel que le réseau Internet, depuis une plate-forme d'accès au réseau Internet.

Ce système comporte des moyens pour extraire un code d'identification du service d'un flux de données en provenance d'un site mettant en oeuvre le service, une base de données dans laquelle sont stockées des informations de tarification de l'ensemble des services payants accessibles depuis la plate-forme d'accès, et des moyens pour insérer dans le flux de données un code d'instructions élaboré à partir d'informations de tarification extraites de la base de données, pour l'élaboration d'un message de tarification du service, le code d'instructions étant adapté pour délivrer le message de tarification.

Ce système comporte en outre un serveur mandataire destiné à récupérer des pages HTML en provenance dudit site et un serveur d'analyse et de traitement des pages reçues qui utilise le protocole d'adaptation de contenu ICAP pour extraire le code d'identification du service et qui est adapté pour interroger la base de données et pour insérer le code d'instructions dans le flux de données.

Dans un mode de réalisation avantageux, le serveur d'analyse et de traitement comporte des moyens de contrôle d'un code caractéristique du service extrait du flux de données.

D'autres buts, caractéristiques et avantages de l'invention apparaîtront à la lecture de la description suivante, donnée uniquement à titre d'exemple, et faite en référence aux dessins annexés sur lesquels :
- la figure 1 est un schéma synoptique illustrant une portion d'une infrastructure de télécommunication permettant l'accès à des sites Internet hébergeant des services payants, intégrant un système de mise à disposition d'informations de taxation conforme à l'invention ; et
- la figure 2 montre un organigramme de fonctionnement du système de la figure 1.

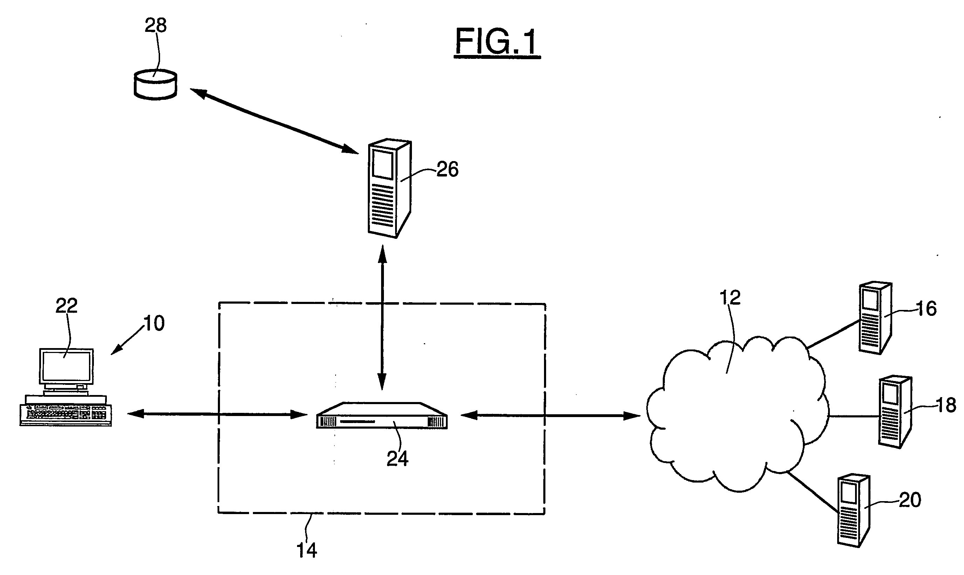

La portion du réseau de télécommunication représentée sur la figure 1 est destinée à permettre à un utilisateur disposant d'un terminal de télécommunication 10 d'accéder au réseau Internet 12 par l'intermédiaire d'une plate-forme 14 d'un fournisseur d'accès à Internet, pour accéder à des serveurs 16, 18 et 20 d'hébergement de services.

Le poste de télécommunication 10 de l'utilisateur peut être constitué par tout type de poste ayant une fonction d'accès au réseau Internet, tel qu'un microordinateur, un poste téléphonique mobile, un assistant personnel, ...

Par ailleurs, dans la mesure où l'invention ne concerne directement que l'accès à des services payants partenaires du fournisseur d'accès, on considèrera, dans la suite de la description, que les serveurs 16, 18 et 20, qui délivrent ces services, sont constitués par des serveurs de fournisseurs de services partenaires du fournisseur d'accès à Internet, bien que l'infrastructure visible sur la figure 1 permette également l'accès à l'ensemble des sites disponibles sur Internet, comme cela est connu en soi.

On notera enfin que dans la description qui va suivre, l'invention concerne l'accès à un service par l'intermédiaire du réseau Internet, les données échangées étant ainsi écrites selon le protocole *http* (« Hypertext Transfert Protocole »). L'invention s'applique cependant également, de manière générale, à l'accès à des services par l'intermédiaire d'un réseau informatique, tel qu'un réseau local d'entreprise.

L'infrastructure visible sur la figure 1 permet, lors de la consultation ou, de manière générale, lors de l'accès aux services payants, de disposer d'informations de taxation ainsi que, de manière optionnelle, d'autres informations relatives aux services, telles que des informations de durée de connexion, des informations relatives à des contenus téléchargés, ...Ces informations sont présentées, lors de la consultation du service, sur l'écran 22 du poste de l'utilisateur 10.

A cet effet, la plate-forme 14 du fournisseur d'accès est pourvue d'un serveur mandataire 24 agencé de manière à intercepter les flux http entre le poste de l'utilisateur 10 et le réseau Internet 12 et destiné à transférer le flux de données provenant de l'un des serveurs d'hébergement 16, 18 et 20 et qui correspond à une réponse à une requête de consultation émise par l'utilisateur, vers un serveur 26 d'analyse et de traitement de ces données pour en extraire un code d'identification du service consulté.

Le serveur 26 d'analyse et de traitement communique avec une base de données 28 dans laquelle sont chargées des informations de taxation de l'ensemble des services payants consultables par l'intermédiaire de la plate-forme 14 du fournisseur d'accès à Internet.

Selon une caractéristique de l'invention, le serveur mandataire 24 implémente un protocole d'adaptation de contenu ICAP (« Internet Content Adaptation Protocole »). Un tel protocole est constitué par un protocole connu de l'homme du métier. Il ne sera donc pas décrit en détail par la suite. On notera cependant qu'il permet de traduire des données véhiculées sur un réseau informatique d'un format de données vers un autre afin, notamment, de pouvoir communiquer avec des serveurs d'applications, et inclue des fonctions de filtrage.

De même, le serveur 26 d'analyse et de traitement implémente le protocole d'adaptation de contenu ICAP afin d'insérer dans le flux de données issu des serveurs 16, 18 et 20 des informations de taxation extraites de la base de données 28 dans laquelle est stockée la grille de tarification des services payants délivrés par les serveurs 16, 18 et 20.

Comme indiqué précédemment, les serveurs 16, 18 et 20 sont constitués par des serveurs partenaires du fournisseur d'accès à Internet auquel est abonné l'utilisateur 10.

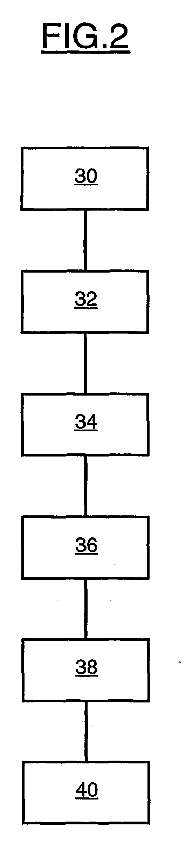

En se référant à la figure 2, lors de la configuration de l'infrastructure, les codes d'identification de services sont fournis respectivement aux serveurs 16, 18 et 20, tandis que des informations de tarification pour l'accès aux services fournis par ces serveurs sont stockées dans la base de données 28 (étape 30).

A l'issue de cette étape préalable d'initialisation, lors de l'utilisation, un utilisateur, souhaitant accéder à un service payant, émet une requête http qui est interceptée par le serveur mandataire 24 (étape 32).

Lors de l'étape 34 suivante, le serveur mandataire transmet la requête vers le réseau Internet 12 à destination du serveur d'hébergement 16, 18 ou 20 concerné.

Il intercepte par ailleurs la réponse émise par le serveur 16, 18 ou 20 et transmet la réponse au serveur 26 d'analyse et de traitement selon le protocole ICAP précédemment mentionné. Le serveur 26 ICAP procède alors à une analyse des en-têtes du flux de données reçues par filtrage de ces données afin de récupérer les réponses qui correspondent à des pages HTML et les pages HTML contenant un code d'identification de service inséré en en-tête, les autres réponses étant directement retransmises au serveur mandataire 24 pour être ensuite émises vers le poste 10 de l'utilisateur (étape 36).

Lors de l'étape 38 suivante, le serveur d'analyse et de traitement 26 extrait des données récupérées le code de service puis récupère dans la base de données 28 les informations de tarification correspondantes.

Lors de l'étape 40 suivante, il insère aux pages HTML filtrées l'indication de tarification sous la forme d'un code HTML inséré directement dans la page HTML reçue.

La page ainsi modifiée est alors transmise au serveur mandataire 24 pour être restituée au poste de l'utilisateur 10.

Il est alors possible à l'utilisateur de consulter un service et de disposer, sur les pages web délivrées par le fournisseur de services, d'informations de tarification et ce, lors de la consultation.

Dans l'exemple de réalisation décrit précédemment, le serveur d'analyse et de traitement 26 procède à l'insertion des informations de tarification sous la forme d'un code HTML inséré directement dans la page HTML reçue en provenance du serveur du fournisseur de service.

Il est également possible, en variante, d'insérer dans le contenu HTML de la page, des codes d'instructions de programmation destinés à être exécutés au sein du navigateur Internet de l'utilisateur pour l'affichage de ces informations de tarification sur une fenêtre spécifique distincte de la page HTML. Par exemple, ces codes d'instructions se présentent sous la forme d'un code écrit en langage « Javascript », c'est-à-dire sous la forme d'un code intégrant des instructions en langage de programmation Java préprogrammées, ce qui permet de simplifier l'élaboration de ce code d'instructions.

On notera également que, selon un autre mode de réalisation, il est possible d'exécuter au sein de la plate-forme 14 une procédure de contrôle de l'identité du service consulté par l'abonné par récupération du code d'identification du service et traitement de ce code en utilisant des informations correspondantes extraites de la base de données 28 de manière à contrôler que le service fourni correspond bien au service demandé par l'utilisateur.

Une telle procédure peut être utilisée, par exemple, pour instaurer une gestion de fraude, notamment pour tout processus de transaction entre l'abonné au fournisseur d'accès et le service proposé. Pour ce faire, par exemple, le serveur 26 d'analyse et de traitement extrait du flux *http,* outre le code d'identification du service, un code caractéristique du service qui est élaboré préalablement à partir d'informations relatives au serveur fournissant le service effectivement demandé, et contrôle ce code. Par exemple, ces informations sont constituées par le nom ou l'adresse IP de la plate-forme ou du serveur hébergeant le service, l'adresse URL de la page d'accueil du service, un identifiant caractéristique du service, ...

Pour contrôler le code extrait, la plate-forme 26 extrait du flux de données reçues ces mêmes informations, mais qui correspondent au serveur émetteur. Un code caractéristique est alors élaboré à partir de ces informations récupérées puis est comparé avec le code caractéristique extrait du flux de données. En cas d'identité, l'identité du service est considérée comme correcte.

Il est également possible, en variante, de contrôler l'identité du service en récupérant de la base de données des informations relatives au service demandé et en comparant ces informations avec des informations correspondantes extraites du flux de données reçues ou élaborée s à partir de ces données.

## Revendications

1. Procédé de mise à disposition d'informations de taxation d'un service payant délivré par un fournisseur de services (16, 18, 20) accessible par un réseau informatique (12) depuis une plate-forme (14) d'accès au réseau informatique, le procédé comporte les étapes consistant à :
- intercepter un flux de données en provenance d'un site (16, 18, 20) mettant en oeuvre le service et à destination d'un terminal d'utilisateur distant (10) ;
- extraire un code d'identification du service par l'analyse des en-têtes du flux de données ;
- interroger une base de données (28) dans laquelle sont stockées des informations de tarification de l'ensemble des services payant accessibles depuis la plate-forme d'accès, à partir du code d'identification extrait, pour récupérer les informations de taxation correspondant au service demandé ; **caractérisé par**
- insérer, dans le flux de données, un code d'instructions élaboré à partir des informations de tarification extraites de la base de données pour commander l'affichage des informations de tarification dans un message de tarification sur le terminal d'utilisateur distant ; et
- transmettre ledit flux de données au terminal d'utilisateur distant.

2. Procédé selon la revendication 1, **caractérisé en ce que** l'analyse des en-têtes du flux de données permet de récupérer les données correspondant à des pages HTML et les données dont l'en-tête contient un code d'identification du service, et **en ce que** l'étape d'extraction du code de service comprend en outre la transmission des autres données à un utilisateur distant (10).

3. Procédé selon l'une des revendications 1 et 2, **caractérisé en ce que** l'étape d'extraction du code d'identification du service est mise en oeuvre en utilisant le protocole d'adaptation de contenu ICAP.

4. Procédé selon l'une quelconque des revendications 1 à 3, **caractérisé en ce que** le code d'instructions est constitué par un code écrit en langage HTML et est inséré dans des données HTML de pages HTML reçues en provenance dudit site pour l'affichage des informations de tarification dans lesdites pages.

5. Procédé selon l'une quelconque des revendications 1 à 3, **caractérisé en ce que** le code d'instructions est constitué par des instructions de programmation et est inséré dans les données HTML de pages HTML reçues en provenance du site pour être exécuté par un navigateur Internet pour l'affichage d'une fenêtre de présentation des informations de tarification.

6. Procédé selon la revendication 5, **caractérisé en ce que** les instructions de programmation sont écrites en langage « Javascript ».

7. Procédé selon l'une quelconque des revendications 1 à 6, **caractérisé en ce qu'**il comporte en outre une étape de contrôle de l'identité du service délivré, par contrôle d'un code caractéristique du service extrait du flux de données.

8. Système de mise à disposition d'informations de taxation d'un service payant délivré par un fournisseur de services (16, 18, 20) accessible par un réseau informatique (12) depuis une plate-forme (14) d'accès au réseau informatique, le système comporte des moyens (24) pour intercepter un flux de données en provenance d'un site mettant en oeuvre le service et à destination d'un terminal distant (10), des moyens (24, 26) pour extraire un code d'identification du service par l'analyse des en-têtes du flux de données, une base de données (28) dans laquelle sont stockées des informations de tarification associées à des codes d'identification pour l'ensemble des services payant accessible depuis la plate-forme d'accès (14) **caractérisé par** des moyens pour insérer dans le flux de données un code d'instructions élaboré à partir d'informations de tarification extraites de la base de données, pour commander l'affichage des informations de tarification dans un message de tarification sur le terminal d'utilisateur distant, et des moyens pour transmettre ledit flux de données au terminal d'utilisateur distant.

9. Système selon la revendication 8, **caractérisé en ce qu'**il comporte un serveur mandataire (24) destiné à récupérer des pages HTML en provenance dudit site et un serveur (26) d'analyse et de traitement des pages reçues qui utilise le protocole d'adaptation de contenu ICAP pour extraire le code d'identification du service et qui est adapté pour interroger la base de données et pour insérer le code d'instructions dans le flux de données.

10. Système selon l'une des revendications 8 et 9, **caractérisé en ce que** le serveur d'analyse (26) et de traitement comporte des moyens de contrôle d'un code caractéristiques du service extrait du flux de données.

## Claims

1. Method of providing charging information for a pay service delivered by a service provider (16, 18, 20) accessible via an IT network (12) from a platform (14) for accessing the IT network, the method comprising steps consisting in:
- intercepting a data stream from a site (16, 18, 20) implementing the service and intended for a remote user terminal (10) ;
- extracting a service identification code by analysing the headers of the data stream;
- querying a database (28) in which is stored pricing information for all the pay services accessible from the access platform, based on the extracted identification code, to recover the charging information corresponding to the requested service; **characterized by**
- inserting, in the data stream, an instruction code generated from the pricing information extracted from the database, to control the display of the pricing information in a pricing message on the remote user terminal; and
- transmitting said data stream to the remote user terminal.

2. Method according to Claim 1, **characterized in that** the analysis of the headers of the data stream makes it possible to recover the data corresponding to HTML pages and the data for which the header contains a service identification code, and **in that** the step for extracting the service code comprises furthermore the transmission of the other data to a remote user (10).

3. Method according to one of Claims 1 and 2, **characterized in that** the step for extracting the service identification code is implemented by using the content adaptation protocol ICAP.

4. Method according to any one of Claims 1 to 3, **characterized in that** the instruction code comprises a code written in HTML language, and is inserted in HTML data of HTML pages received from said site to display the pricing information in said pages.

5. Method according to any one of Claims 1 to 3, **characterized in that** the instruction code comprises programming instructions and is inserted in the HTML data of HTML pages received from the site to be executed by an Internet browser to display a window for presenting pricing information.

6. Method according to claim 5, **characterized in that** the programming instructions are written in "Javascript" language.

7. Method according to any one of Claims 1 to 6, **characterized in that** it comprises furthermore a step for checking the identity of the service delivered, by checking a characteristic code of the service extracted from the data stream.

8. System for providing charging information for a pay service delivered by a service provider (16, 18, 20) accessible via an IT network (12) from a platform (14) for accessing the IT network, the system comprising means (24) for intercepting a data stream from a site implementing the service and intended for a remote terminal (10), means (24, 26) for extracting a service identification code by analysing the headers of the data stream, a database (28) in which is stored pricing information associated with identification codes for all the pay services accessible from the access platform (14), **characterized by** means for inserting in the data stream an instruction code generated from pricing information extracted from the database, to control the display of the pricing information in a pricing message on the remote user terminal, and means for transmitting said data stream to the remote user terminal.

9. System according to Claim 8, **characterized in that** it comprises a proxy server (24) intended to recover HTML pages from said site and a server (26) for analyzing and processing the received pages which uses the content adaptation protocol ICAP to extract the service identification code and which is suitable for querying the database and for inserting the instruction code in the data stream.

10. System according to one of Claims 8 and 9, **characterized in that** the analysis and processing server (26) comprises means of checking a characteristic code of the service extracted from the data stream.

## Patentansprüche

1. Verfahren zur Bereitstellung von Gebühreninformationen eines gebührenpflichtigen Dienstes, der von einem Dienstleister (16, 18, 20) erbracht wird und über ein Rechnernetz (12) von einer Zugangsplattform (14) zum Rechnernetz aus zugänglich ist, wobei das Verfahren die folgenden Schritte umfasst;
- das Abfangen eines Datenstroms, der von einer Site (16, 18, 20), die den Dienst umsetzt, kommt und an ein fernes Benutzerendgerät (10) gerichtet ist;
- das Extrahieren eines Identifikationscodes des Dienstes durch Analyse der Köpfe des Datenstroms;
- das Abfragen einer Datenbank (28), in der Informationen über die Vergütungssätze der Gesamtheit der von der Zugangsplattform aus zugänglichen, gebührenpflichtigen Dienste gespeichert sind, ausgehend vom extrahierten Identifikationscode, um die dem nachgefragten Dienst entsprechenden Gebühreninformationen abzurufen; **gekennzeichnet durch**
- das Einführen eines Befehlscodes, der ausgehend von den aus der Datenbank extrahierten Informationen über die Vergütungssätze erstellt wurde, in den Datenstrom, um die Anzeige der Informationen über die Vergütungssätze in einer Vergütungssatznachricht am fernen Benutzerendgerät anzuweisen; und
- das Übertragen des Datenstroms an das ferne Benutzerendgerät.

2. Verfahren nach Anspruch 1, **dadurch gekennzeichnet, dass** die Analyse der Köpfe des Datenstroms das Abrufen der Daten, die HTML-Seiten entsprechen, und der Daten, deren Kopf einen Identifikationscode des Dienstes enthält, gestattet, und dass der Schritt des Extrahierens des Codes des Dienstes außerdem das Übertragen der anderen Daten an einen fernen Benutzer (10) umfasst.

3. Verfahren nach einem der Ansprüche 1 und 2, **dadurch gekennzeichnet, dass** der Schritt des Extrahierens des Identifikationscodes des Dienstes unter Verwendung des Inhaltsadaptierungsprotokolls ICAP durchgeführt wird.

4. Verfahren nach einem der Ansprüche 1 bis 3, **dadurch gekennzeichnet, dass** der Befehlscode aus einem in HTML geschriebenen Code besteht und in HTML-Daten von HTML-Seiten, die von der Site kommend empfangen wurden, eingeführt wird, um die Informationen über die Vergütungssätze auf den Seiten anzuzeigen.

5. Verfahren nach einem der Ansprüche 1 bis 3, **dadurch gekennzeichnet, dass** der Befehlscode aus Programmierbefehlen besteht und in die HTML-Daten von HTML-Seiten, die von der Site kommend empfangen wurden, eingeführt wird, um von einem Internetbrowser ausgeführt zu werden, um ein Fenster zur Darstellung der Informationen über die Vergütungssätze anzuzeigen.

6. Verfahren nach Anspruch 5, **dadurch gekennzeichnet, dass** die Programmierbefehle in der Sprache "Javascript" geschrieben sind.

7. Verfahren nach einem der Ansprüche 1 bis 6, **dadurch gekennzeichnet, dass** es außerdem einen Schritt des Kontrollierens der Identität des erbrachten Dienstes durch Kontrolle eines für den Dienst charakteristischen Codes, der aus dem Datenstrom extrahiert wird, umfasst.

8. System zur Bereitstellung von Gebühreninformationen eines gebührenpflichtigen Dienstes, der von einem Dienstleister (16, 18, 20) erbracht wird und über ein Rechnernetz (12) von einer Zugangsplattform (14) zum Rechnernetz aus zugänglich ist, wobei das System Mittel (24) zum Abfangen eines Datenstroms, der von einer Site, die den Dienst umsetzt, kommt und an ein fernes Benutzerendgerät (10) gerichtet ist, Mittel (24, 26) zum Extrahieren eines Identifikationscodes des Dienstes durch Analyse der Köpfe des Datenstroms sowie eine Datenbank (28), in der Informationen über die Vergütungssätze, denen Identifikationscodes zugeordnet sind, für die Gesamtheit der von der Zugangsplattform (14) aus zugänglichen, gebührenpflichtigen Dienste gespeichert sind, aufweist, **gekennzeichnet durch** Mittel zum Einführen eines Befehlscodes, der ausgehend von aus der Datenbank extrahierten Informationen über die Vergütungssätze erstellt wurde, in den Datenstrom, um die Anzeige der Informationen über die Vergütungssätze in einer Vergütungssatznachricht am fernen Benutzerendgerät anzuweisen, und **durch** Mittel zum Übertragen des Datenstroms an das ferne Benutzerendgerät.

9. System nach Anspruch 8, **dadurch gekennzeichnet, dass** es einen Proxy-Server (24), der dem Abrufen von HTML-Seiten, die von der Site kommen, dient, sowie einen Server (26) zur Analyse und Verarbeitung der empfangenen Seiten aufweist, der das Inhaltsadaptierungsprotokoll ICAP verwendet, um den Identifikationscode des Dienstes zu extrahieren, und der dazu geeignet ist, die Datenbank abzufragen und den Befehlscode in den Datenstrom einzuführen.

10. System nach einem der Ansprüche 8 oder 9, **dadurch gekennzeichnet, dass** der Server (26) zur Analyse und Verarbeitung Mittel zum Kontrollieren eines für den Dienst charakteristischen codes, der aus dem Datenstrom extrahiert wird, aufweist.
